# EUROPEAN PATENT APPLICATION

(11) **EP 2 076 041 A1**
(43) Date of publication of application: **01.07.2009**
(21) Application number: 07301737.8
(22) Date of filing: 21.12.2007
(51) Int. Cl.: H04N 7/24

(54) **Method for transferring a real-time uncompressed video stream in a network of subscriber stations**

(71) Applicant: Deutsche Thomson OHG, 30625 Hannover (DE)
(72) Inventor: Li, Hui, 30539 HANNOVER (DE); Koehler, Ralf, 30455 HANNOVER (DE)
(74) Representative: Ruellan-Lemonnier, Brigitte

(57) **Abstract**

The invention concerns a method of transferring a real-time stream, in particular an uncompressed video stream, in a network of subscriber stations. Furthermore, the invention also relates to a source device for transferring a real-time stream as well as a destination device. More particularly, the invention deals with a method for transferring a real-time uncompressed video stream between a source device S_DEV and a destination device D_DEV connected through a network. The video stream is composed by sequence of video frame VFₖ, where k is a Video Frame index. According to the invention, the method comprises steps of:
- decomposing video frames VFₖ into a number N² of video sub-frames VSF_{k,p,q}, where N is an integer, and p and q are indexes for identifying video sub-frames, p and q being both comprised between 1 and N;
- arranging video sub-frame VSF_{k,p,q} in payload of RTP packets;
- sending the RTP packets on the network;
- receiving the RTP packets;
- detecting a loss of RTP packet whose payload contains a part of one of the video sub-frame VSF_{k,p,q};
- when no packet loss is detected, recomposing transferred video frames Vₖ from payload of received packets;
- when a packet loss is detected, recomposing transferred video frames Vₖ from payload of received packets, payload of lost packet being replaced by interpolations of payloads of received packets.

## Description

### Field Of The Invention

The invention concerns a method of transferring a real-time stream, in particular an uncompressed video stream, in a network of subscriber stations. Furthermore, the invention also relates to a source device for transferring a real-time stream as well as a destination device. Both are to be used in a method as mentioned above.

### Background Of The Invention

Thinking about professional video production in studios, this is a field where non-linear video editing needs to be performed. This is done with workstations based on high-end personal computers and corresponding software for non-linear video editing, today. As Ethernet technology is the de facto standard in the field of computer networks, it is not surprising that there is a demand from the studios to also build their networks for professional video editing based on Ethernet network technology. If uncompressed video data needs to be transported from a professional video camera to a data recorder, there is a very high bandwidth needed on the network for doing the job. For example, the HD Video format 1920 x 1080i with a frame rate of 24 frames per second and 10 bit colour resolution for the RGB colours requires a data rate of 1.6 Gbit/s for transferring the uncompressed video stream.

Including audio data and to be compliant with even higher resolution video formats like 2K with a resolution of 2048 x 1556 pixels or 4K, the network technology should be ready to deal with much higher bandwidth demands. Therefore, in one scenario the studios rely on the already existing 10Gbit Ethernet network technology. This network technology is based on two optical fibres one for each direction. The wavelength of the light transporting the data is between 1269 and 1356 nm.

From Internet technology various protocols exist for transporting real-time data streams. In case of transferring uncompressed data streams for HDTV video production, the reliable TCP protocol cannot be used. Instead of that it is the IP/UDP/RTP protocol stack that is available for this purpose. Hereby, IP stands for the IPv4 Internet Protocol version 4. UDP stands for the well known User Data Protocol and RTP stands for the Real-time Transport Protocol. This protocol stack consists of unsecured protocol layers. All the services from the TCP protocol like acknowledging receipt of data packets and repeating of lost data packets are not implemented in the UDP/RTP protocols and in worst case the limited bandwidth would not be sufficient for it. As the order of transmission of packets can also be affected when transporting the packets over the LAN, the RTP protocol layer provides sequence numbering and time stamping. But RTP doesn't provide any form of reliability or a protocol-defined flow/congestion control. It doesn't enforce any error treatment measures, such as any mechanisms for recovering for packet loss. Application itself should decide about how to cope with a lost data unit.

For transport of studio-quality video streams, a RTP payload format for uncompressed video is defined in RFC4175. It supports a range of standard and high-definition video formats. For real-time transmission of uncompressed video, retransmission of lost packet is impossible, because it will cause network traffic congestions. In RFC4175, there is no method for coping with the problem of lost data.

A known solution to overcome the congestion problem is to split all original video frames into sub-frames before sending on the network under a single packet payload: for example each sub-frame contains two contiguous lines of the video frame. The video frame is recomposed only when all sub-frames are received. An advantage of this known method is, when a packet containing a sub-frame is not received (e.g. the packet is lost), only a part of the whole frame misses. A retransmission of the lost packet is sufficient to recompose the exact original video frame.

If network congestion problems are really critical, even a single sub-frame retransmission is impossible. The only way for coping with lost packets is to recompose video frame by interpolating missing sub-frames: this is not possible when sub-frames contain contiguous part of video frame.

One of the goals of the present invention is to propose a method for decomposing and recomposing uncompressed video frame and transporting them by RTP. This method can handle with packet loss during transport.

### Summary Of The Invention

The technical problem that present invention intends to solve is to transport a video frame on RTP packet format able to cope with eventual packet loss.

Thus, the present invention concerns, according to a first aspect, a method for transferring a real-time uncompressed video stream between a source device S_DEV 10 and a destination device D_DEV 100 connected through a network, wherein the real time transport protocol is used, the video stream being composed by sequence of video frame VFₖ, where k is a Video Frame index.

According to the invention, the method comprises steps of:
- decomposing each video frame VFₖ into a number N² of corresponding video sub-frames VSF_{k,p,q}, where N is an integer, and p and q are indexes for identifying video sub-frames, p and q being both comprised between 1 and N;
- arranging video sub-frame VSF_{k,p,q} in payload of RTP packets;
- sending the RTP packets on the network;
- receiving the RTP packets after a RTP transport;
- detecting a loss of RTP packet whose payload contains a part of one of the video sub-frame VSF_{k,p,q};
- when no packet loss is detected, recomposing transferred video frames Vₖ from payload of received packets;
- when a packet loss is detected, recomposing transferred video frames Vₖ from payload of received packets, payload of lost packet being replaced by interpolations of payloads of received packets.

The present invention concerns, according to a second aspect, a source device S_DEV, 10 for sending a real-time uncompressed video stream, comprising an implementation of the Real Time Protocol for packet zing the video stream. The video stream is composed by sequence of video frames VFₖ, where k is a video frame index.

According to the invention, the source device S_DEV, 10 includes:
- means for decomposing each video frame VFₖ into a number N² of corresponding video sub-frames VSF_{k,p,q}, where N is an integer, and p and q are indexes for identifying video sub-frames, p and q being both comprised between 1 and N;
- means for arranging video sub-frame VSF_{k,p,q} in payload of RTP packets;
- means for inserting a Payload Type representing the number N² in a first header field of the RTP packets.
- means for inserting a Frame Index identifying video frame VFₖ corresponding to the packet payload in a second header field of the RTP packets;
- means for determining a Sub-Frame Index identifying video sub-frame VSF_{k,p,q} whose a part is arranged in RTP packet payload and for inserting the Sub-Frame Index in a third header field of the RTP packet;
- means for sending the RTP packets.

The present invention concerns, according to a third aspect, a destination device D_DEV 100 for receiving a real-time uncompressed video stream, the video stream being composed by sequence of video frames VFₖ, where k is a Video Frame index.

According to the invention, the destination device for receiving a real-time uncompressed video stream includes:
- means for receiving RTP packets;
- means for determining a Payload Type by reading a first header field of RTP packets;
- means for determining a Video Frame Index by reading a second header field of the RTP packets, the Identification Frame identifies the video frame VFₖ from which the video sub-frame VSF_{k,p,q} are decomposed said sub-frame VSF_{k,p,q} whose a part is arranged in the RTP packet payload;
- means for determining a Sub-Frame Index by reading a third header field of the RTP packet, the Sub-Frame Index identifies the video sub-frames VSF_{k,p,q} whose a part is arranged in the RTP packet payload;
- means for detecting a loss of RTP packet whose payload contains a part of one of the video sub-frame VSF_{k,p,q};
- means for recomposing transferred video frames Vₖ from payload of received RTP packets.

### Brief Description Of The Drawings

Embodiments of the invention are described in text form hereinafter and are illustrated with drawings, which show in:
Fig. 1, a block diagram of a source device applying a method for transferring a real-time uncompressed video stream according to the invention and;
Fig. 2a and 2b, an illustration of video frame decomposition (for N = 2) done by a source device according to the invention;
Fig. 3, a block diagram of a destination device for receiving a real-time uncompressed video stream according to the invention and;
Fig. 4, a flow chart describing method steps applied by a destination device according to the invention and;
Fig. 5, a payload format designed in RFC4175;
Fig. 6, a format of the RTP packet sent by a source device according to the invention and received by a destination device according to the invention and;
Fig. 7, illustration of header fields of RTP packet sent by a source device and received by a destination device according to the invention.

### Detailed Description Of Preferred Embodiments

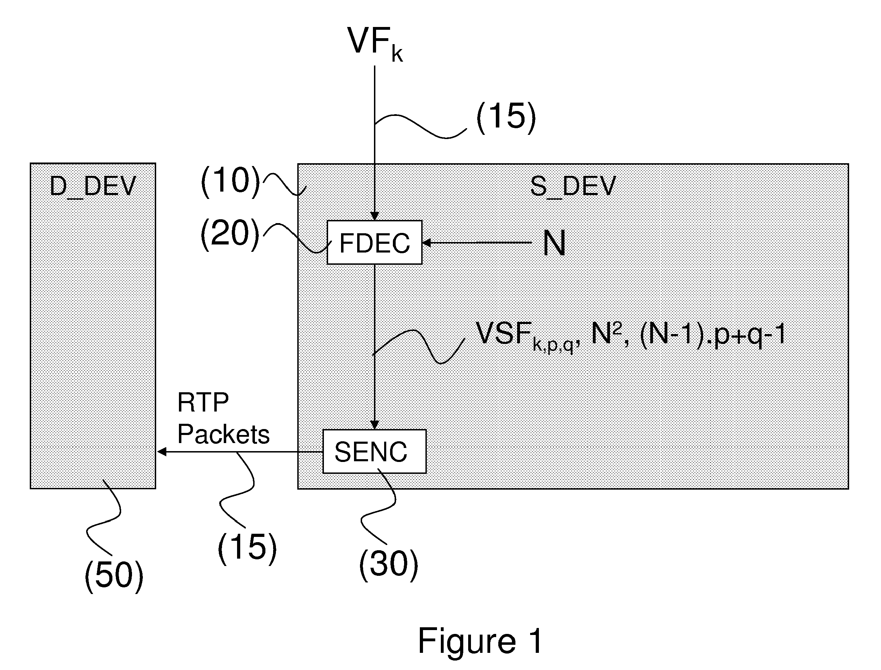

In Fig. 1 reference number 10 denotes a source device S_DEV. The source device S_DEV 10 is connected to a destination device D_DEV 50 via a network 15. The source device S_DEV transfers a real-time uncompressed video stream to the destination device D_DEV 50 wherein the real time transport protocol is used. The real-time uncompressed video stream is composed by sequence of video frame VFₖ, where k is a Video Frame index which identifies a Video Frame in a unique way.

The source device S_DEV 10 comprises means FDEC 20 for decomposing video frames VFₖ into a number N² of corresponding video sub-frames VSF_{k,p,q}, where N is an integer and p and q are indexes for identifying video sub-frames. p and q are both comprised between 1 and N.

N is either predetermined, with a fixed value either it is determined by an external device in function of size of video frames or in function of transfer reliability considerations.

Advantageously, pixels composing the video sub-frame VSF_{k,p,q} are pixels extracted from the video frame VFₖ and which are not contiguous in the video frame VFₖ.

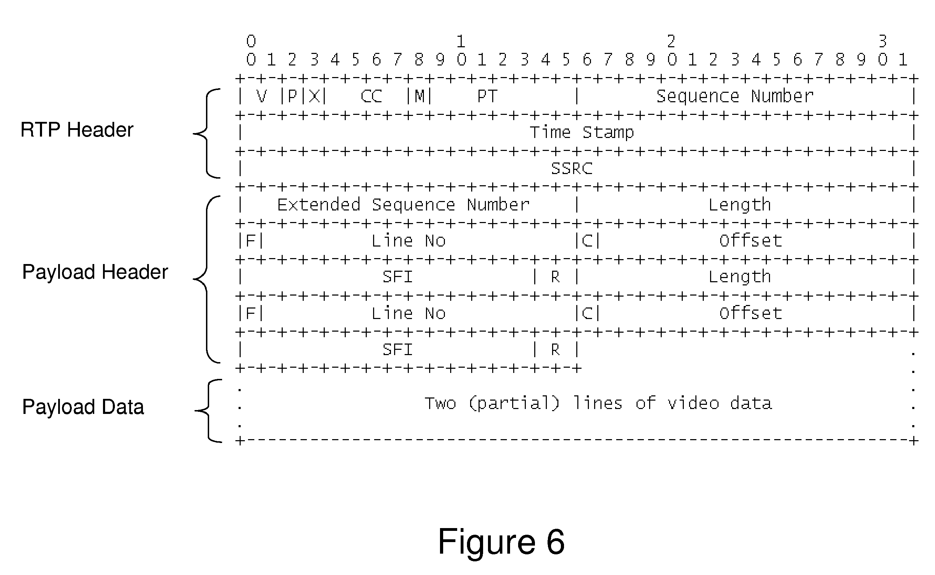

The destination device D_DEV 50 also comprises means SENC 30 for arranging video sub-frame VSF_{k,p,q} in payload of RTP packets. A video sub-frame VSF_{k,p,q} can be either transmitted in one RTP packet payload either sliced in parts as multiple lines which are transmitted in different RTP packets. For example, two contiguous lines of the video sub-frame VSF_{k,p,q} are arranged in each RTP packet payload, as shown in Figure 6.

The source device S_DEV 10 further comprises:
- means SENC 30 for inserting a Payload Type representing the number N² in a first header field of the RTP packets;
- means SENC 30 for inserting a Frame Index identifying video frame VFₖ corresponding to the RTP packet payload in a second header field of the RTP packets;
- means SENC 30 for determining a Sub-Frame Index identifying video sub-frame VSF_{k,p,q} whose a part is arranged in RTP packet payload and for inserting the Sub-Frame Index in a third header field of the RTP packet;
- means SENC 30 for sending the RTP packets.

In one embodiment of the invention, the second header field of the RTP packet whose payload contains a part of the video sub-frames VSF_{k,p,q} is a representation of k.

In one embodiment of the invention, the third header field of the RTP packet whose payload contains a part of the video sub-frames VSF_{k,p,q} is a binary representation of N.(p-1)+q-1 decimal value.

In one embodiment of the invention, the RTP packet header is compatible with RFC4175 protocol.

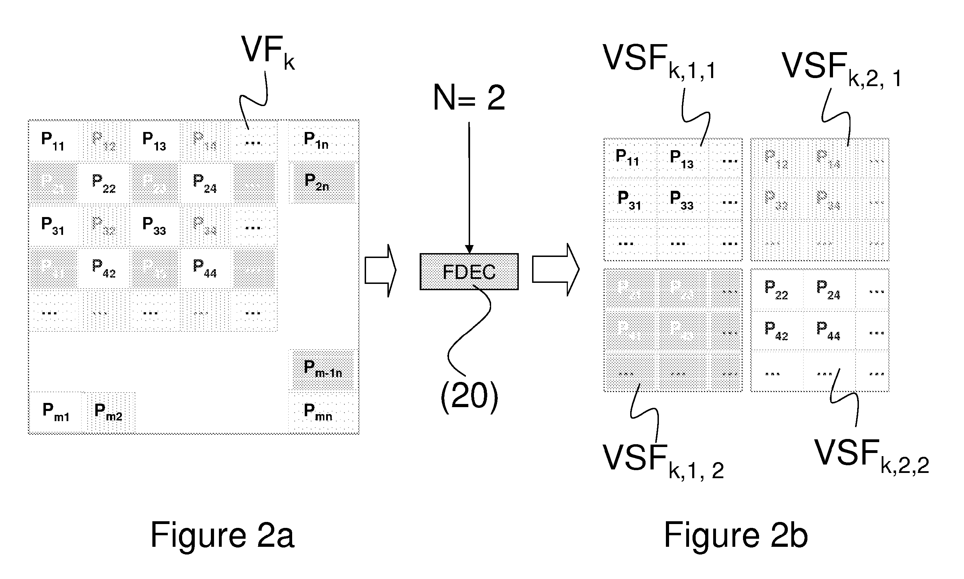

Fig. 2a and 2b show an illustration of the decomposition step applied by means FDEC 20 for decomposing video frames, for an example where N is equal to 2.

A video frame VFₖ is composed of n.m pixels P_{k,i,j} arranged in n columns and m line. i is a column index comprised between 1 and n, j is a line index comprised between 1 and m.

N is less than the lowest value between m and n. The means FDEC 20 for decomposing video frames creates from the video frames VFₖ four video sub-frame VSF_{k,p,q} where p and q are both comprised between 1 and 2.

According to the invention, the video sub-frame VSF_{k,p,q} is composed of NCVSF_{k,p,q}.NLVSF_{k,p,q} pixels SP_{,k,p,q,ii,jj} arranged in NCVSF_{k,p,q} columns and NLVSF_{k,p,q} lines, where NCVSF_{k,p,q} = Floor((n-p+2)/N) and NLVSF_{k,p,q} = Floor((m-q+2)/N)). Here "floor(x)" represents well-known floor function that returns the highest integer less than or equal to x.

SP_{k,p,q,ii,jj} is equal to P_{k,(ii-1).N+(p-1),(jj-1).N+(jj-1)} for the indexes ii and jj comprised respectively between 1 and NCVSF_{k,p,q} and 1 and NLVSF_{k,p,q}.

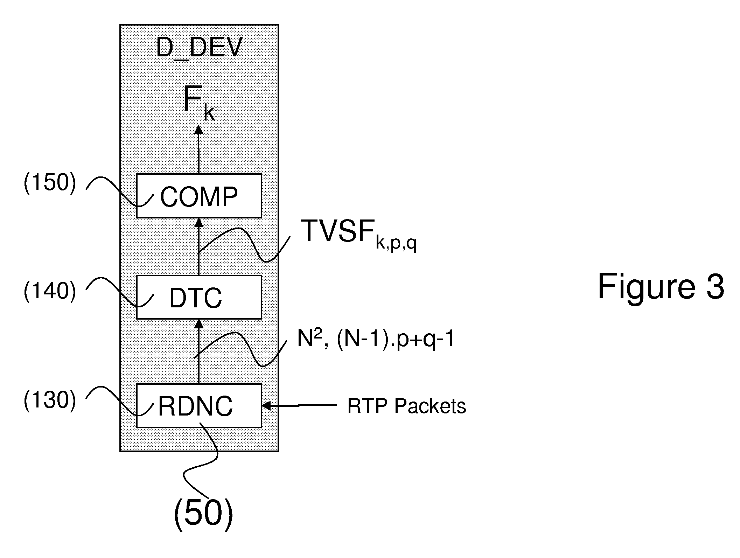

Fig. 3 represents a block diagram of a destination device D_DEV 50 for receiving a real-time uncompressed video stream according to the invention. The destination device D_DEV 100 comprises:
- means RDNC 130 for receiving RTP packets;
- means DTC 140 for detecting a loss of RTP packet whose payload contains a part of one of the video sub-frame VSF_{k,p,q};
- means COMP 150 for recomposing transferred video frames Vₖ from payload of received RTP packets.

Advantageously, means RDNC 130 for receiving RTP packets includes :
- means for determining a Payload Type by reading a first header field of the RTP packet;
- means for determining a Video Frame Index by reading a second header field of the RTP packet, the Identification Frame identifies the video frame VFₖ from which a part of the video sub-frame VSF_{k,p,q} is arranged in the RTP packet payload;
- means for determining a Sub-Frame Index by reading a third header field of the RTP packet, the Sub-Frame Index identifies the video sub-frames VSF_{k,p,q} transferred in the RTP packet payload;

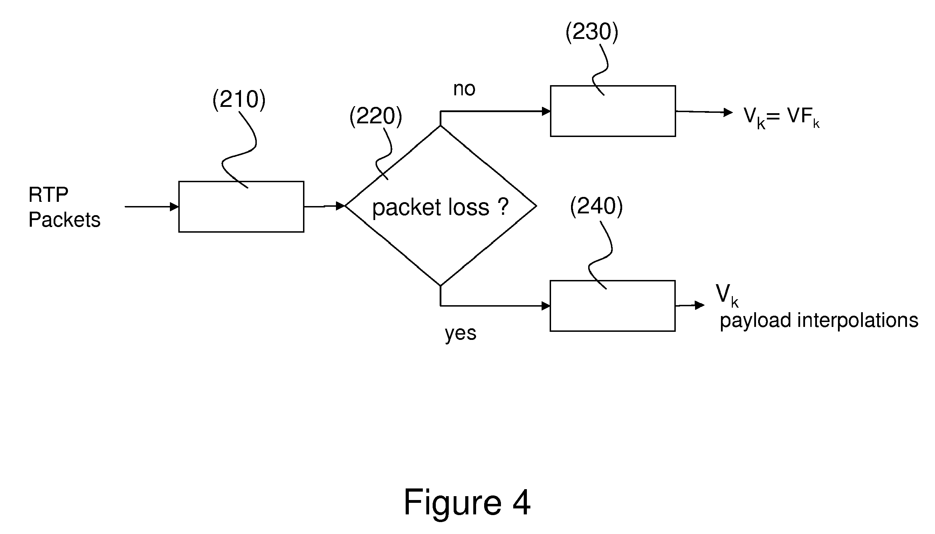

Fig. 4 represents a flow chart of the method of reception applied by the destination device D_DEV 50. The method of reception includes three main steps:
- a first step 210 of receiving the RTP packets after a RTP transport ;
- a second step 220 of detecting a loss of RTP packet whose payload contains a part of one of the video sub-frame VSF_{k,p,q};
- a third step 230, 240 of recomposing transferred video frames Vₖ from payload of received packets.

Advantageously, the first step 210 of receiving RTP packets further includes a step of reading a first header field of RTP packets containing the Payload Type which is indicative of the number of video sub-frames VSF_{k,p,q}.

Advantageously, the first step 210 of receiving RTP packets further includes a step of reading a second field header containing the Video Frame Index which represents the video frame VFₖ from which a part of the video sub-frame VSF_{k,p,q} contained in the RTP packet payload is decomposed.

For example, the second header field of the RTP packet whose payload contains a part of the video sub-frames VSF_{k,p,q} is a representation of k.

Advantageously, the first step 210 of receiving RTP packets further includes a step of reading a third header field of the RTP packet containing the Sub-Frame Index which corresponds to the RTP packet payload.

For example, the third header field of the RTP packet whose payload contains a part of the video sub-frames VSF_{k,p,q} is a binary representation of N. (p-1)+q-1 decimal value.

The second step 220 of detecting packet loss deals with, for example, a check of the number of the received parts of video sub-frames VSF_{k,p,q} transmitted under RTP packet payloads. It is for example a counting operation of receiving packets including a same Video Frame Index.

The third step 230, 240 of recomposing transferred video frames includes an alternative depending whether a packet loss is detected or not :
- when no packet loss is detected, the recomposition of transferred video frames Vₖ is done from payload of received packets;
- when a packet loss is detected, recomposition of transferred video frames Vₖ from payload of received packets, payload of lost packet being replaced by interpolations of payloads of received packets.

In the first case, the means for recomposing recomposes a transferred video frames Vₖ which is identical to VFₖ.

In the second case, the means for recomposing recomposes a transferred video frames Vₖ from payload of received packets, where payload of lost packet is replaced by interpolations of payloads of received packets.

For example, when a packet containing the two first lines of V_{k,1,2} is lost, the third step 240 consists in replacing the missing pixels by values which are interpolated from received packet payload.

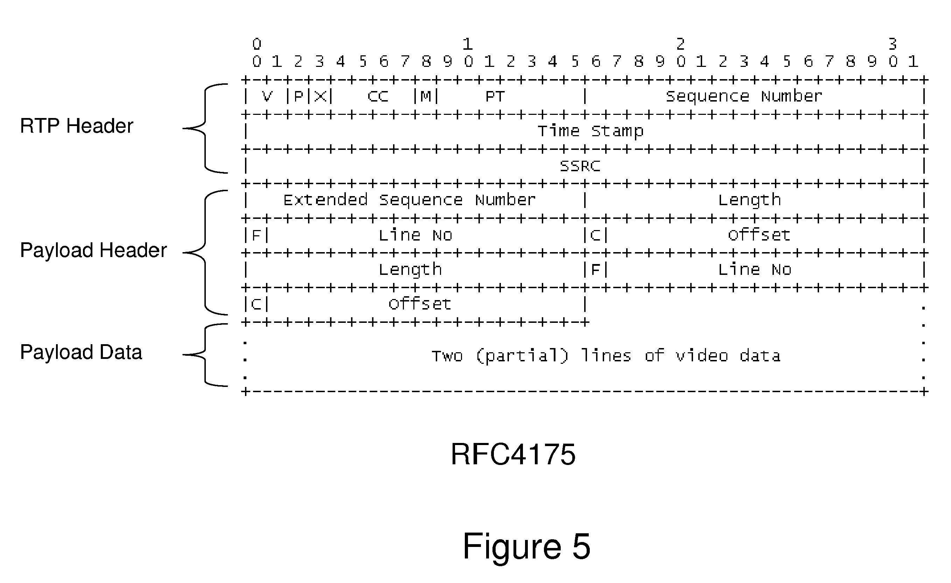

Fig. 5 shows the format of an RFC4175 packet. Two entries are marked with a dedicated reference number. One is the sequence number in a corresponding 16 bits field and the other is a time stamp in a 32 bits field. The sequence number increments by 1 for each RTP data packet sent, and may be used by the receiver to detect packet losses and to restore the packet sequence. The initial value of the sequence number should be random (unpredictable) to make known plaintext-attacks on encryption more difficult, even if the source itself does not use encryption, because the packets may flow through a translator that does.

The time stamp reflects the sampling instant of the first octet in the RTP data packet. The sample instant is derived from a clock that increments monotonically and linearly in time to allow synchronization in jitter calculations. If RTP packets are generated periodically, the nominal sampling instant as determined by the sampling clock is to be used, not a reading of the system clock. As explained above under conditions and constraints of sending uncompressed video data over the network, the time stamp field need not necessarily be transported over the network to the destination device, because this information can be derived from the internal clock of the destination device by itself, if the frame rate is known, which is usually the case, and lost packets are detected. The sequence number already provides for recognizing lost packets and, therefore, this condition is fulfilled.

The payload contains for example two lines of a video frame VF_{k.} In the state of the art, if such a packet is lost during transmission, an interpolation of missing data with contiguous pixels is not efficient because the missing data does form a compact block of contiguous pixels. An Identification Field (F) is defined as one single bit length.

Fig. 6 shows an implementation of protocol stacks in sending and destination device for the purpose of transferring uncompressed video data streams over the network according to the invention.

In the implementation according to the invention, the Payload Type field (PT) is also utilized to indicate if the payload data contains decomposed video stream. Payload type is a 7 bits field which may designates the payload nature of the transmitted data as decomposed video stream.

For example a way of coding a Payload Type could be realized by assigning some bits to indicate the decomposed sub-frames:
'0000000': for a complete video frame VSF_{k,p,q};
'0000001': for a video frame VFₖ decomposed in 4 video sub-frames VSF_{k,p,q};
'0000010': for a video frame VFₖ decomposed in 9 video sub-frames VSF_{k,p,q} ;
'0000011': for a video frame VFₖ decomposed in 16 video sub-frames VSF_{k,p,q}; and so on ...

In the implementation according to the invention, a Sub-Frame Index (SFI) field must be inserted in the payload header of each RTP packet to identify each video sub-frame VSF_{k,p,q}. This field has a length which corresponds to the Payload Type. Maximum Sub-Frame Index SFI length is 14 bits, it corresponds to the PT field equal to '1111111'.

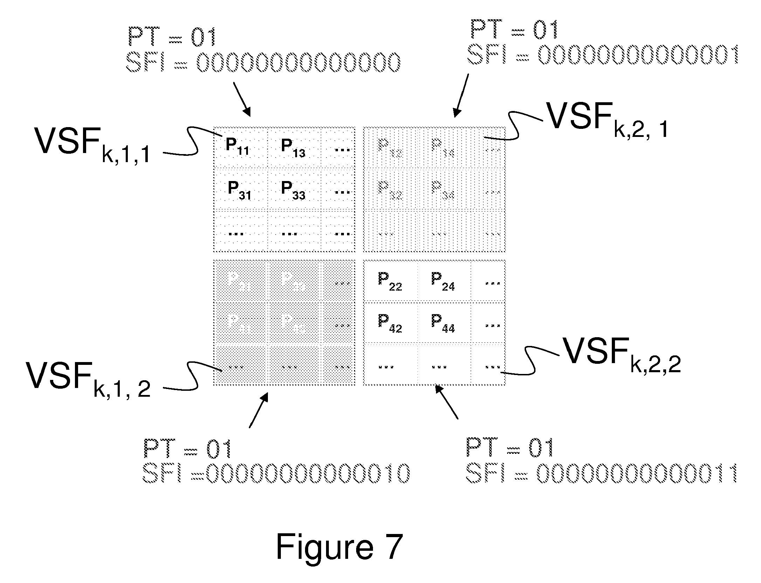

On the example shown on fig.7, the number N is equal to 2: that means an original video frame VFk is split in four sub-frames. In this case, Payload Type field is equal to '0000001', only the two last significant bits of the field are used. In the example shown on fig.7, SFI is equal to '00000000000000', '00000000000001', '00000000000010', '00000000000011', respectively for sub-frames VSF_{k,1,1}, VSF_{k,2,1}, VSF_{k,1,2}, VSFk,2,2. The "R" field in Figure 6 is a 2 bit reserved field.

The "lines of video data" cited in the payload of the Fig.6 is not restricted to be exactly a physical line of video frame or of video sub-frame. "Video line" in the payload can be any possible scan line of video frame or sub-frame in the network transfer byte order, which depend on the transfer protocol.

Destination device D_DEV 50 may parse each line data through the "Length" and "Offset" value from the payload header structure.

A RTP packet may contain some scan line data of sub-frame, or whole sub-frame if the sub-frame is small enough, or line data from different sub-frames.

## Claims

1. Method for transferring a real-time uncompressed video stream between a source device S_DEV (10) and a destination device D_DEV (100) connected through a network (15) wherein the real time transport protocol is used, the video stream being composed by sequence of video frame VFₖ, where k is a Video Frame index, **characterized in that** it comprises steps of :
- decomposing video frames VFₖ into a number N² of video sub-frames VSF_{k,p,q}, where N is an integer, and p and q are indexes for identifying video sub-frames, p and q being both comprised between 1 and N;
- arranging video sub-frame VSF_{k,p,q} in payload of RTP packets;
- sending the RTP packets on the network;
- receiving the RTP packets;
- detecting a loss of RTP packet whose payload contains a part of one of the video sub-frame VSF_{k,p,q};
- when no packet loss is detected, recomposing transferred video frames Vₖ from payload of received packets;
- when a packet loss is detected, recomposing transferred video frames Vₖ from payload of received packets, payload of lost packet being replaced by interpolations of payloads of received packets.

2. Method according to claim 1, **wherein** pixels composing the video sub-frame VSF_{k,p,q} are pixels extracted from the video frame VFₖ and which are not contiguous in the video frame VFₖ.

3. Method according to claims 1 or 2, the video frame VFₖ being composed of n.m pixels P_{k,i,j} arranged in n columns and m lines, i being a column index comprised between 1 and n, j being a line index comprised between 1 and m, N being lower than the lowest value between m and n, **wherein** the video sub-frame VSF_{k,p,q} is composed of NCVSF_{k,p,q}.NLVSF_{k,p,q} pixels SP_{k,p,q,ii,jj} arranged in NCVSF_{k,p,q} columns and NLVSF_{k,p,q} lines, where NCVSF_{k,p,q} = Floor((n-p+2)/N) and NLVSF_{k,p,q} = Floor ((m-q+2)/N)), and SP_{k,p,q,ii,jj} = P_{k,(ii-1).N+(p-1),(jj-1).N+(jj-1)} for the indexes ii and jj comprised respectively between 1 and NCVSF_{k,p,q} and 1 and NLVSF_{k,p,q}.

4. Method according to one of the claims 2 or 3, a Payload Type representing the number N² of the video sub-frames VSF_{k,p,q}, **wherein** a first header field of RTP packets contains the Payload Type.

5. Method according to one of the claims 1 to 4, a Video Frame Index identifying the video frame VFₖ from which a part of the video sub-frame VSF_{k,p,q} contained in the RTP packet payload is decomposed, **wherei**n a second field of the RTP packets header contains the Video Frame Index.

6. Method according to claim 5, **wherein** the second header field of the RTP packet whose payload contains a part of the video sub-frames VSF_{k,p,q} is a representation of k.

7. Method according to one of the claims 1 to 6, a Sub-Frame Index identifying the video sub-frame VSF_{k,p,q}, **wherein** a third header field of the RTP packet contains the Sub-Frame Index which corresponds to the RTP packet payload.

8. Method according to the claim 7, **wherein** the third header field of the RTP packet whose payload contains a part of the video sub-frames VSF_{k,p,q} is a binary representation of N.(p-1)+q-1 decimal value.

9. Method according to one of the claims 1 to 8, **wherein** the RTP packet header is compatible with RFC4175 protocol.

10. Source device S_DEV (10) for sending a real-time uncompressed video stream, comprising an implementation of the Real Time Protocol for packet zing the video stream, the video stream being composed by sequence of video frames VFₖ, where k is a video frame index, **characterized in that** it includes :
- means for decomposing video frames VFₖ into a number N² of corresponding video sub-frames VSF_{k,p,q}, where N is an integer, and p and q are indexes for identifying video sub-frames, p and q being both comprised between 1 and N;
- means for arranging video sub-frame VSF_{k,p,q} in payload of RTP packets;
- means for inserting a Payload Type representing the number N² in a first header field of the RTP packets;
- means for inserting a Frame Index identifying video frame VFₖ corresponding to the RTP packet payload in a second header field of the RTP packets;
- means for determining a Sub-Frame Index identifying video sub-frame VSF_{k,p,q} whose a part is arranged in RTP packet payload and for inserting the Sub-Frame Index in a third header field of the RTP packet;
- means for sending the RTP packets on network (15).

11. Source device S_DEV (10) according to claim 10, **wherein** pixels composing the video sub-frame VSF_{k,p,q} are pixels extracted from the video frame VFₖ and which are not contiguous in the video frame VFₖ.

12. Destination device D_DEV (100) for receiving a real-time uncompressed video stream, the video stream being composed by sequence of video frames VFₖ, where k is a Video Frame index, **characterized in that** it includes:
- means for receiving RTP packets;
- means for detecting a loss of RTP packet whose payload contains a part of one of the video sub-frame VSF_{k,p,q};
- means for recomposing transferred video frames Vₖ from payload of received RTP packets.

13. Destination device D_DEV (50) according to claim 12, **wherein,** it further includes:
- means for determining a Payload Type N² by reading a first header field of the RTP packet;
- means for determining a Video Frame Index by reading a second header field of the RTP packet, the Identification Frame identifies the video frame VFₖ from which a part of the video sub-frame VSF_{k,p,q} is arranged in the RTP packet payload;
- means for determining a Sub-Frame Index by reading a third header field of the RTP packet, the Sub-Frame Index identifies the video sub-frames VSF_{k,p,q} transferred in the RTP packet payload.

14. Destination device D_DEV (50) according to one of claims 12 or 13, **wherein** pixels composing the video sub-frame VSF_{k,p,q} are pixels extracted from the video frame VFₖ and which are not contiguous in the video frame VFₖ.

15. Destination device D_DEV according to one of claims 12 to 14, **wherein** when no packet loss is detected, the means for recomposing recomposes a transferred video frames Vₖ which is identical to VFₖ.

16. Destination device D_DEV according to one of claims 12 to 14, **wherein** when a packet loss is detected, the means for recomposing recomposes a transferred video frames Vₖ from payload of received packets, where payload of lost packet is replaced by interpolations of payloads of received packets.
